# EUROPEAN PATENT APPLICATION

(11) **EP 4 084 213 A1**
(43) Date of publication of application: **02.11.2022**
(21) Application number: 21833476.1
(22) Date of filing: 03.06.2021
(51) Int. Cl.: H01P 1/207

(54) **BAND-STOP FILTER AND RADIO FREQUENCY DEVICE**

(30) Priority: 02.07.2020 CN 202021280887 U
(71) Applicant: ROSENBERGER TECHNOLOGIES CO., LTD., Dianshanhu Village, Kunshan Suzhou, Jiangsu 215345 (CN)
(72) Inventor: ZHU, Lanlan, Jiangsu 215345 (CN); LUO, Wei, Jiangsu 215345 (CN); LU, Jian, Jiangsu 215345 (CN); SUN, Songlin, Jiangsu 215345 (CN)
(74) Representative: Isarpatent
(86) International application number: PCT/CN2021/098153
(87) International publication number: WO 2022/001570

(57) **Abstract**

The present disclosure discloses a band-stop filter and a radio frequency device, and the band-stop filter includes a cavity, an input port and an output port disposed on the cavity, and a transmission mainline and a plurality of resonators are disposed within the cavity, both ends of the transmission mainline are connected with the input port or the output port respectively, each resonator includes a resonant chamber and a resonant column disposed within the resonant chamber, a coupling wall is disposed between the resonant column and the corresponding transmission mainline, the coupling wall is formed by extending upwardly from the bottom wall of the cavity, the coupling wall and the transmission mainline are coupled. The present disclosure can meet a small space between the pass band and the stop-band and the requirement of strong suppression, achieve good echo loss performance simultaneously, and save the processing cost and the commissioning cost.

## Description

### FIELD OF THE DISCLOSURE

The present disclosure relates to the technical field of mobile communication devices, and in particular to a band-stop filter and a radio frequency device.

### BACKGROUND

The microwave devices composed of band-stop filters have become a necessary part in the modern mobile communication technologies. With the continuous development of the electronic information industry, it has proposed increasingly high requirements for the stop-band bandwidth, insertion loss, external suppression, power capacity, device size, cost, etc. of the band-stop filter.

The Patent Publication No. CN10660219A entitled "High-Performance Band-Stop Filter and Communications Cavity Device thereof' discloses a band-stop filter with a small space between the pass band and the stop-band, and high suppression, but the band-stop filter needs a coupling disc to achieve coupling, which brings high processing cost, complex assembly, and poor consistent. In addition, the Patent Publication No. CN207303308U entitled "Band-Stop Filter and Radio Frequency Device" provides a band-stop filter with high suppression, but the space between the pass band and the stop-band is large, which is not applicable to the band-stop filter with a small space between the pass band and the stop-band.

Therefore, the above solutions do not reach the requirement of the band-stop filter with a small space between the pass band and the stop-band, high suppression, and simple processing.

### SUMMARY

The purpose of the present disclosure is to overcome the deficiencies of the prior art, providing a band-stop filter and a radio frequency device.

In order to achieve the above object, the present disclosure proposes the following technical solution: a band-stop filter, including a cavity, an input port and an output port disposed on the cavity, a transmission mainline and a plurality of resonators disposed within the cavity. Both ends of the transmission mainline are connected with the input port or the output port respectively. Each resonator includes a resonant chamber and a resonant column disposed within the resonant chamber. A coupling wall is disposed between the resonant column and the corresponding transmission mainline and the coupling wall is formed by extending upwardly from the bottom wall of the cavity, the coupling wall and the transmission mainline are connected by coupling.

Preferably, a coupling step is disposed between at least one resonant column and a corresponding coupling wall.

Preferably, at least one side of the coupling step is connected with the resonant column or the coupling wall.

Preferably, the coupling step is formed by extending from the bottom wall of the cavity towards an upper end of the cavity.

Preferably, the coupling step is lower than the coupling wall.

Preferably, the resonant chamber is provided with a coupling window near one side of the transmission mainline and the coupling wall is located in the coupling window.

Preferably, the transmission mainline is a strip line or a coaxial line.

Preferably, the plurality of resonators are distributed along the transmission mainline in the cavity.

Preferably, one or more rows of resonators are distributed along the transmission mainline in the cavity.

The present disclosure also discloses another technical solution: a radio frequency device including the band-stop filter described above.

The beneficial effect of the present disclosure is that on the basis of unchanging the location of the resonant column, a coupling structure such as a coupling wall is disposed, so that the band-stop filter can meet a small space between the pass band and the stop-band, and the requirement of strong suppression, and achieve good echo loss performance and simultaneously save the processing cost and the commissioning cost.

### BRIEF DESCRIPTION OF THE DRAWINGS

Fig. 1 is a perspective structural view of a band-stop filter according to an embodiment of the present disclosure; and
Fig. 2 is a top view of a band-stop filter according to an embodiment of the present disclosure.

Reference numeral:
10. cavity, 11. upper end, 12. lower end, 13. left end, 14. right end, 20. input port, 30. output port, 40. transmission mainline, 41. first transmission mainline portion, 42. second transmission mainline portion, 43. third transmission mainline portion, 50. resonator, 51, first row of resonators, 52. second row of resonators, 53. resonant chamber, 54. resonant column, 55. coupling window, 60. coupling wall, 70. coupling step.

### DETAILED DESCRIPTION

The technical solution of the present disclosure will be described in conjunction with the drawings of the present disclosure.

A band-stop filter and a radio frequency device disclosed from the present disclosure is able to assure the Q value of the resonant chamber and reduce the insertion loss of the filter by adjusting the coupling amount of the filter by the coupling wall disposed between the transmission mainline and the corresponding resonant column without changing the location of the resonant column.

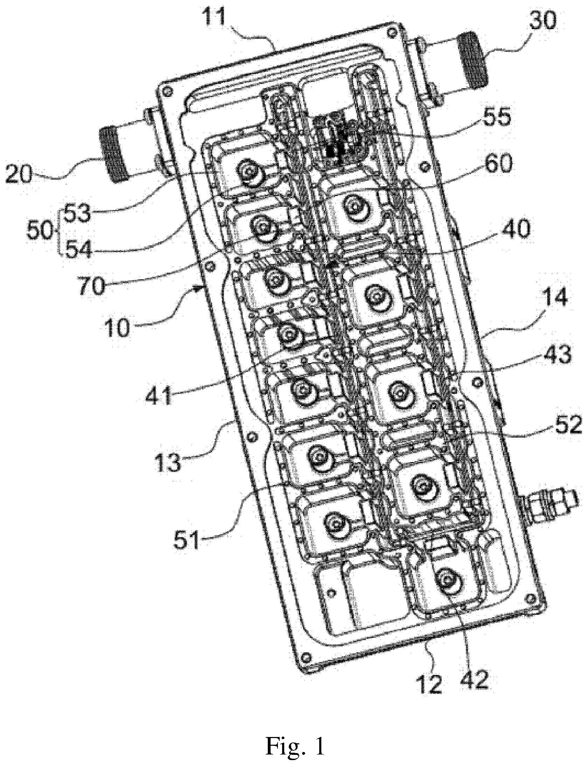

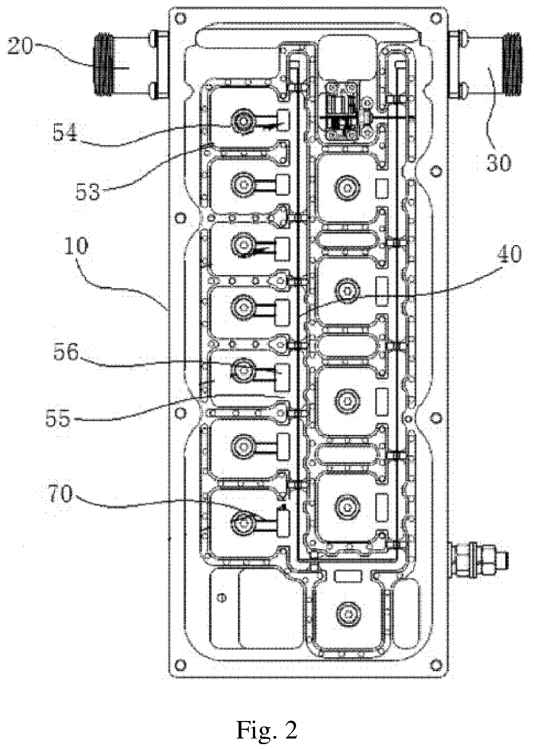

In connection with Figs. 1 and 2, a band-stop filter disclosed from the present disclosure includes a cavity 10, an input port 20, an output port 30, a transmission mainline 40, and a plurality of resonators 50, in this embodiment, the cavity 10 is formed with an accommodating space to receive the transmission mainline 40 and the resonators 50, and the upper end of the cavity 10 can be covered by a cover (not shown) to form a closed space for transmitting signals.

In this embodiment, the cavity 10 includes an upper end 11 and a lower end 12 opposite to each other, a left end 13 and a right end 14 opposite to each other, and for convenience of description, the direction from the upper end 11 to the lower end 12 is defined as the longitudinal direction, and the direction from the left end 13 to the right end 14 is defined as the lateral direction. In this embodiment, the input port 20 and the output port 30 are respectively disposed on the left end 13 and the right end 14 of the cavity 10 adjacent to the upper end 11 thereof.

The transmission mainline 40 is disposed within the cavity 10, and the two ends thereof are connected with the input port 20 or the output port 30 respectively to achieve the signal transmission from the input port 20 to the output port 30. The distribution of the transmission mainline 4 within the cavity 10 may be determined based on the location of the input port 20, the output port 30 on the cavity 10 and the distribution of the resonators 50 within the cavity 10, and the present disclosure is not limited thereto.

The plurality of resonator 50 in the cavity 10 can be disposed in one or more rows, in the present embodiment, two rows of resonators are disposed in the cavity 10, and each row of resonators is distributed in the cavity 10 along the longitudinal direction. The two rows of resonators are distributed along the inner side of the cavity 10, and for convenience of description, the two rows of resonators are defined as the first row of resonators 51 and the second row of resonators 52, wherein the first row of resonators 51 is disposed close to the input port 20, the second row of resonators 52 is disposed close to the output port 30. The first row of resonators 51 and the second row of resonators 52 are displaced by a resonator 5. Specifically, the second row of resonator 52 and the first row of resonator 51 are displaced by a resonator 50 downwardly.

In the present embodiment, the transmission mainline 40 is or approximated U-shaped distribution in the cavity 10. Specifically, one end of the transmission mainline 40 is connected with the input port 20, and then the transmission mainline 40 extends to the lower end of the first row of resonators 51 along the direction from the upper end to the lower end of the cavity 10 (i.e., along the longitudinal direction) to form a first transmission mainline portion 41, and the first row of resonators 51 is located on the left side of the first transmission mainline portion 41. The lower end of the first transmission mainline portion 41 is bent rightward to form a second transmission mainline portion 42, and the second transmission mainline portion 42 crosses between the two adjacent resonators 50 of the lowermost end of the second row of resonators 52 such that the resonator 50 located at the lowermost end of the second row of resonators 52 is located on the lower side of the second transmission mainline portion 42. The right end of the second transmission mainline portion 42 extends upwardly in the direction close to the upper end of the cavity 10 to form a third transmission mainline portion 43, the second row of resonators 52 is located on the left side of the third transmission mainline portion 43 in addition to the resonator 50 located at the lowermost end of the second row of resonators 52. The upper end of the third transmission mainline portion 43 is connected with the output port 30. When implemented, the transmission mainline 40 can be a strip line or a coaxial line.

Each row of resonators includes a plurality of resonators 50 which are parallelarranged, each resonator 50 includes a resonant chamber 53 and a resonant column 54 located within the resonant chamber 53, and the resonance column 54 is preferably located at the center position of the resonant chamber 53, each resonant chamber 53 is provided with a coupling window 55 at one side thereof close to the transmission mainline 40, and each resonance column 54 produces coupling to the transmission mainline 40 through a corresponding coupling window 55. When implemented, the resonant chamber 53 can be square, circular or any other shape. The resonant chamber 53 and the resonant column 54 are made of a metal material, or a substitute material such as ceramic or quartz or other materials.

Preferably, each coupling window 55 is also provided with a coupling wall 60 integrally formed with the bottom wall of the cavity 10, the processing is simple, and the coupling wall 60 is specifically formed by extending in the direction from the bottom wall of the cavity 10 to the upper end of the cavity 10. Electromagnetic coupling between the coupling wall 60 and the corresponding transmission mainline 40 can reach a larger coupling amount between the resonator 50 and the transmission mainline 40, so that the filter 50 reaches a wider coupling bandwidth while meeting the small space between the pass band and the stop-band. In order to achieve a suitable coupling amount, the height, broadband and thickness of the coupling wall 60 can be adjusted as needed. And the coupling wall 60 can be square, circular or other arbitrary shape. The coupling wall 60 can adjust the coupling amount between the resonator 50 and the transmission mainline 40 in a large range, and the use of the coupled wall 60 can greatly reduce the impedance mismatch of the transmission mainline 40 due to the electromagnetic coupling, and improve the passband echo return loss performance. Further, since the coupling using the coupling wall 60, without changing the position of the resonant chamber 53, the Q value (Q is the quality factor) of the resonant chamber 53 can be assured, the insert loss of the filter can be lowered, thereby achieving a very good insertion loss performance of the filter.

More preferably, a coupling step 70 may be provided between the coupling wall 60 and the resonant column 54, and when implemented, a coupling step 70 may be provided between the at least one resonance column 54 and the corresponding coupling wall 60, the coupling step 70 is also formed by extending in the direction from the bottom wall of the cavity 10 to the upper end of the cavity 10, and the height of the coupling step 70 is lower than the height of the coupling wall 60. Further, both sides of the coupling step 70 may be neither connected with the coupling wall 60 nor connected with the resonant column 54, or at least one side of the coupling step 70 is connected with the resonant column 54 or the coupling wall 60. In the present embodiment, a coupling step 70 is provided between each resonance column 54 of the first row of resonators 51 and the corresponding coupling wall 60, and both ends of the coupling step 70 are connected with the coupling wall 60 and the resonant column 54, respectively. The coupling step 70 can be cooperated with the coupling wall 60, and adjust the coupling amount in a small range. In order to achieve a suitable coupling amount, the height and width of the coupling step 70 can also be adjusted, and the shape thereof can be any shape.

In other alternative embodiments, only one row of resonators can be disposed in the cavity 10, the row of resonators is disposed longitudinally, and located at one side of the transmission mainline 40, the input port 20 and the output port 30 are located at the upper end and the bottom end of the cavity 10, respectively, and connected with both ends of the transmission mainline 40, respectively. Further, the two rows of the resonators can also be disposed in the cavity 10, and the two rows of resonators are disposed longitudinally, and are located on both sides of the transmission mainline 40, and the input port 20 and the output port 30 are located at the upper end and the bottom end of the cavity 10, respectively, and are connected with both ends of the transmission mainline 40, respectively. Of course, the distribution of the resonators 50 and the transmission mainline 40 in the cavity 10 and the locations of the input port 20, the output port 30 in the cavity 10 are not limited in the present disclosure.

## Claims

1. A band-stop filter, **characterized in that** the band-stop filter comprises a cavity, an input port and an output port disposed on the cavity, a transmission mainline and a plurality of resonators disposed within the cavity, both ends of the transmission mainline being connected with the input port or the output port, respectively, each resonator including a resonant chamber and a resonant column disposed within the resonant chamber, a coupling wall being disposed between the resonant column and a corresponding transmission mainline, the coupling wall being formed by extending upwardly from the bottom wall of the cavity, the coupling wall and the transmission mainline being connected by coupling.

2. The band-stop filter according to claim 1, **characterized in that** a coupling step is disposed between at least one resonant column and a corresponding coupling wall.

3. The band-stop filter according to claim 2, **characterized in that** at least one side of the coupling step is connected with the resonant column or the coupling wall.

4. The band-stop filter according to claim 2, **characterized in that** the coupling step is formed by extending from the bottom wall of the cavity towards an upper end of the cavity.

5. The band-stop filter according to claim 4, **characterized in that** the coupling step is lower than the coupling wall.

6. The band-stop filter according to claim 1, **characterized in that** the resonant chamber is provided with a coupling window near one side of the transmission mainline, and the coupling wall is located in the coupling window.

7. The band-stop filter according to claim 1, **characterized in that** the transmission mainline is a strip line or a coaxial line.

8. The band-stop filter according to claim 1, **characterized in that** the plurality of resonators are distributed along the transmission mainline in the cavity.

9. The band-stop filter according to claim 1, **characterized in that** one or more rows of resonators are distributed along the transmission mainline in the cavity.

10. A radio frequency device, **characterized in that** the radio frequency device comprises the band-stop filter according to any one of claims 1 to 9.
